# EUROPEAN PATENT APPLICATION

(11) **EP 1 736 888 A1**
(43) Date of publication of application: **27.12.2006**
(21) Application number: 05727841.8
(22) Date of filing: 29.03.2005
(51) Int. Cl.: G06F 12/14, G06F 1/00, G06K 17/00, H04L 9/10

(54) **SECURE SYSTEM, SECURE DEVICE, TERMINAL DEVICE, METHOD, AND PROGRAM**

(30) Priority: 31.03.2004 JP 2004106338
(71) Applicant: MATSUSHITA ELECTRIC INDUSTRIAL CO., LTD., Kadoma-shi, Osaka 571-8501 (JP)
(72) Inventor: HIGASHI, Akio c/o Matsushita El. Ind. Co., Ltd, Chuo-ku, Osaka-shi, Osaka 540-6319 (JP); MURAKAMI, Hiroki c/o Matsushita El. Ind. Co., Ltd, Chuo-ku, Osaka-shi, Osaka 540-6319 (JP); TOKUDA, Katsumi c/o Matsushita El. Ind. Co., Ltd, Chuo-ku, Osaka-shi, Osaka 540-6319 (JP)
(74) Representative: Pautex Schneider, Nicole Véronique
(86) International application number: PCT/JP2005/005817
(87) International publication number: WO 2005/096157

(57) **Abstract**

IC card (300) supplies an encryption key which enables content use, to a terminal apparatus (200) belonging to a domain made up of terminal apparatuses (200) which share the IC card (300). The IC card (300) includes: an extra-domain usage rule holding unit (305) which stores a rule for use of the IC card (300) in a terminal apparatus (200) which is outside of the domain; and an extra-domain use permission judgment unit (309) which judges, according to the usage rule, whether or not use of the IC card (300) is permitted, when the IC card (300) is provided to the terminal apparatus (200). The IC card (300), in addition, supplies the encryption key to the terminal apparatus (200) which is outside of the domain, when the extra-domain use permission judgment unit (309) judges that use is permitted.

## Description

### Technical Field

The present invention is a secure system including a terminal apparatus and a secure device, and relates to a content use system, an IC card, a content use apparatus, a method and a program for controlling use of a content inside and outside a domain which is an area made up of, for example, a plurality of content use apparatuses and IC cards, in which common use of a content or license is possible.

### Background Art

In current digital broadcasting, in order to provide a content only to a member having a contract for paid broadcasts, there exists a content use system in which content use is controlled using a security module (for example, an IC card) which is tamper-proof in terms of hardware. In such a system, the IC card securely stores an encryption key necessary for decrypting an encrypted content, and technology referred to as "pairing", which enables content encryption in one specific content use apparatus, is often used. However, such a content use system is inconvenient in the case where the member owns a plurality of content use apparatuses as the IC card can only be used with one specific apparatus. It is also inconvenient when the IC card can only be used in one specific content use apparatus, for example, in a broadcasting format (referred to as server-type broadcasting) in which a content is accumulated in a hard disk once, then viewed at a time desired by the member. In addition, details regarding the server-type broadcasting specification are given in STD-B25 issued by ARIB (Association of Radio Industries and Businesses).

Furthermore, in current BS/CS/terrestrial digital broadcasting in Japan, IC cards and content use apparatuses are not paired, and an IC card can be used with any content use apparatus. However, in the sever-type broadcasting which can provide various services, there is a strong need to limit the content use apparatuses that are able to use an IC card.

From this background, a content use system has been proposed, in which an IC card is shared by a plurality of content use apparatuses. For example, in the content use system disclosed in Patent Document 1, a common identifier is assigned to a group (hereinafter referred to as domain) made up of a plurality of content use apparatuses which share an IC card, and a plurality of IC cards, and it is possible for a content use apparatus to use an IC card that has been assigned with the same identifier.
Patent Document 1: Japanese translation of PCT International Application (Tokuhyo) 2001-518255

### Disclosure of Invention

### Problem that Invention is to solve

However, according to the aforementioned conventional technology, an IC card cannot be used in a content use apparatus which is outside the domain, thus there can be cases arising where user convenience is poor. For example, convenience is extremely poor in the case where the user brings an IC card to a friend's house, as even temporary use of the IC card in a content use apparatus at the friend's house is absolutely impossible.

In other words, even if the IC card is inserted in a content use apparatus belonging to a domain other than the same domain, it is not possible to reproduce a content on such content use apparatus.

In view of the aforementioned problem, it is an objective of the present invention to provide a secure system, a secure device, a content use apparatus, a method and a program which, while giving due consideration to confidential data protection, balance both the protection of confidential data and user convenience by enabling the use of a secure device even in a content use apparatus outside a domain.

### Means to Solve the Problems

In order to achieve the aforementioned objective, the secure system in the present invention is a secure system having a secure device holding confidential data and a terminal apparatus to which said secure device is connected, said secure system including: a first storage unit included in one of said secure device and said terminal apparatus, and which stores domain information defining a domain of said secure device and said terminal apparatus; a second storage unit included in one of said secure device and said terminal apparatus, and which stores an extra-domain usage rule which is a rule for use of said secure device outside the domain; a first judgment unit included in one of said secure device and said terminal apparatus, and which judges, according to the domain information, whether one of said secure device and said terminal apparatus is currently inside the domain or outside the domain; a second judgment unit included in one of said secure device and said terminal apparatus, and which judges, according to the extra-domain usage rule, whether or not use of said secure device is permitted, in the case where it is judged by said first judgment unit to be outside the domain; and a control unit included in one of said secure device and said terminal apparatus, and which enables the use of said secure device in said terminal apparatus in any of: the case where it is judged by said first judgment unit to be inside the domain; and the case where it is judged by the second judgment unit that use is permitted.

According to this structure, user convenience can be improved as it is possible for the secure device to be used even in a content use apparatus outside of the domain, within the limit of the extra-domain usage rule indicating a rule for use of the secure device outside of the domain. In addition, the use of the secure device outside the domain is not unlimited, and is limited according to the extra-domain usage rule, protection of confidential data such as a content is possible.

Here, the first storage unit may be included in the secure device. The first judgment unit may be included in the terminal apparatus, and judge whether the terminal apparatus is currently inside the domain or outside the domain. The control unit may be included in the secure device.

Here, said terminal apparatus may be a content use apparatus reproducing an encrypted content, the confidential data may be an encryption key for decrypting the content, and said control unit may supply the confidential data from said secure device to said terminal apparatus, in any of: the case where it is judged by said first judgment unit to be inside the domain; and the case where it is judged by said second judgment unit that use is permitted.

Here, the extra-domain usage rule may concern at least one of the following extra-domain criteria: (a) the number of content reproductions; (b) the number of content use apparatuses; (c) the number of domains; (d) a validity period; (e) a use duration; (f) the number of terminal IDs; (g) the number of domain IDs; (h) the number of contents; and (i) the number of licenses.

According to this structure, the right protection for the provider and the convenience for the user can be adequately adjusted by setting the usage rule in accordance with the provider's intentions and the characteristics of the content, as it is possible to set extra-domain usage rules such as: content use permitted up to 3 times outside the domain; content use outside of domain permitted for up to 2 content use apparatuses (2 terminal IDs); content use outside of the domain permitted up to 1 time; use outside of the domain permitted up to April 1; use outside of the domain permitted for 2 weeks; use outside of the domain permitted from April 6; extra-domain limited to 1 domain ID; up to 2 types of contents; up to 2 licenses (encryption keys); and so on.

Here, the secure system may include a history recording unit which records an extra-domain use history indicating a history of use of the content in a content use apparatus outside of the domain, the use being based on the extra-domain usage rule, wherein said second judgment unit may judge whether or not the extra-domain use history exceeds a limit of permitted use indicated in the extra-domain usage rule.

According to this structure, the second judgment unit is able to make a judgment easily by comparing the limit of permitted use indicated in the use history outside of the domain (hereinafter as extra-domain use history) and the extra-domain usage rule.

Here, said second storage unit and said second judgment unit may be included in said secure device.

According to this structure, as the secure device, per se, judges whether or not use is permitted, and the extra-domain use history is recorded in the secure device, the content use apparatus can be used even when having an approximately conventional structure. Furthermore, as security devices such as an IC card are made tamper-proof at a hardware level, the security level can be improved. In addition, by exchanging the IC card with a new IC card, updating of security including the extra-domain usage rule becomes possible.

Here, said second storage unit and said second judgment unit may be included in said content use apparatus.

According to this structure, the content use apparatus, per se, judges whether or not use is permitted, and the extra-domain use history is recorded in the content use apparatus, the secure device can be used even when having an almost conventional structure.

Here, the secure device may further include a deleting unit which deletes the extra-domain use history at a predetermined time.

Here, the deleting unit may delete the extra-domain use history when the secure device is inserted into the secure device slot of any of the content use apparatuses inside a specific domain.

Here, the deleting unit may delete the extra-domain use history when the secure device is inserted into the secure device slot of a specific content use apparatus inside a specific domain.

According to this structure, in such cases where the limit of permitted use indicated in the usage rule is all used up, it is possible for the user to initialize (reset) the extra-domain use history again.

Here, the deleting unit may delete the extra-domain use history upon receiving a delete command from the content use apparatus.

According to this structure, initialization of the extra-domain use history can be controlled through the content use apparatus.

Here, it is possible to have the content use apparatus receive an extra-domain use history delete command from an outside source, and transmit such delete command to the secure device inserted in a secure device slot inside the same domain.

According to this structure, by having, for example, the provider, in other words, the content distribution apparatus control the initialization, detailed control for the use of the secure device outside the domain becomes possible.

Here, said content use apparatus may include a reception unit which receives a new extra-domain usage rule from an outside source, and said second storage unit may update the extra-domain usage rule with the new extra-domain usage rule.

According to this structure, by having, for example, the provider, in other words, the content distribution apparatus freely control the details of the usage rule, dynamic and detailed use of the secure device outside the domain becomes possible.

Here, said reception unit may receive an extra-domain usage rule added to a license transmitted by a content distribution server.

According to this structure, an extra-domain usage rule that suits the characteristics of the content and the license can be set for each license.

Here, the second storage unit may store a default extra-domain usage rule.

According to this structure, the usage rule can be previously recorded into the secure device at the time of factory shipment, without performing ex-post setting of the extra-domain usage rule.

Here, said content use apparatus may further include: an obtainment unit which obtains the extra-domain usage rule and an extra-domain use history from a secure device inserted into a secure device slot; and a display unit which displays a guidance regarding a use status for a content use apparatus outside of the domain, based on the obtained extra-domain usage rule and the extra-domain use history.

According to this structure, the user is able to know the use status through the guidance display.

Here, when the extra-domain use history reaches the limit of permitted use indicated in the extra-domain usage rule, the display unit may display a guidance prompting the deletion of the extra-domain use history.

According to this structure, even an accustomed user is able to respond in the case where use is no longer permitted in a content use apparatus outside the domain.

Here, the display unit may display, as the guidance, a message indicating the method for deleting the extra-domain use history.

According to this structure, even an accustomed user can take specific action for deleting in the case where use is no longer permitted in a content use apparatus outside the domain.

Here, in the case where the difference between the extra-domain usage rule and the limit of permitted use indicated in the extra-domain usage rule goes below a predetermined value, the display unit may display such fact as the guidance.

According to this structure, in the content use apparatus outside the domain, it is possible to warn the user before use.

Here, said content use apparatus may further include: an obtainment unit which obtains the extra-domain usage rule and an extra-domain use history from a secure device inserted into a secure device slot; and a display unit which displays a guidance regarding a use status for a content use apparatus outside of the domain, based on the obtained extra-domain usage rule and the extra-domain use history.

According to this structure, in the case where use is no longer permitted in a content use apparatus outside the domain, warning of such fact is made. Therefore, it is possible to prevent the user from assuming that the secure device is malfunctioning.

Furthermore, the same aforementioned actions/effects are produced with regard to the secure device, content use apparatus, content use method, and program in the present invention.

### Effects of the Invention

According to the secure system, the secure device, the content use apparatus, the content use method and program in the present invention, the use of the secure device is made possible, within the limit of the usage rule, even in a content use apparatus outside of the domain. Therefore, while taking into consideration the protection of confidential data such as a content, it is possible to achieve a balance between both the protection of confidential data and user convenience.

### Brief Description of Drawings

[FIG. 1] FIG. 1 is a diagram showing the outline of the content use system in the first embodiment of the present invention.
[FIG. 2] FIG. 2 is a block diagram showing the overall structure of the present content use system.
[FIG. 3] FIG. 3 is a diagram showing an example of a content accumulated in the content accumulation unit.
[FIG. 4] FIG. 4 is a diagram showing an example of license information accumulated in the license information accumulation unit.
[FIG. 5] FIG. 5 is a diagram showing an example of a usage rule accumulated in the extra-domain usage rule accumulation unit.
[FIG. 6] FIG. 6 is a diagram showing an example of domain information accumulated in the domain information accumulation unit.
[FIG. 7] FIG. 7 is a diagram showing an example of EMM data.
[FIG. 8] FIG. 8 is a diagram showing an example of data in the terminal ID holding unit.
[FIG. 9] FIG. 9 is a diagram showing an example of domain information held in the domain information holding unit.
[FIG. 10] FIG. 10 is a diagram showing an example of an extra-domain usage rule held in the extra-domain usage rule holding unit.
[FIG. 11] FIG. 11 is a diagram showing an example of a use record accumulated in the extra-domain use record accumulation unit.
[FIG. 12] FIG. 12 is a diagram showing a flowchart for the setting of an extra-domain usage rule in an IC card.
[FIG. 13] FIG. 13 is a diagram showing a flowchart for content reproduction.
[FIG. 14] FIG. 14 is a diagram showing a flowchart for the deletion of the extra-domain use record.
[FIG. 15] FIG. 15 is a diagram showing the outline of the secure system in the second embodiment of the present invention.
[FIG. 16] FIG. 16 is a block diagram showing the structure of the terminal apparatus Ta and the memory card.
[FIG. 17] FIG. 17 is a diagram showing an example of domain information held in the domain information holding unit.
[FIG. 18] FIG. 18 is a diagram showing another example of domain information held in the domain information holding unit.

### Numerical references

- 100: Distribution apparatus
- 101: Content accumulation unit
- 102: License information accumulation unit
- 103: Extra-domain usage rule accumulation unit
- 104: Extra-domain usage rule addition unit
- 105: Domain information accumulation unit
- 106: Terminal list addition unit
- 107: EMM generation unit
- 108: Broadcast signal multiplex-transmission unit
- 200: Terminal apparatus
- 201: Broadcast signal reception-separation unit
- 202: Content storage unit
- 203: Reproduction unit
- 204: EMM obtainment unit
- 205: Terminal ID read-out unit
- 206: Terminal ID holding unit
- 207: Extra-domain usage rule retrieval unit
- 208: First transmission-reception unit
- 300: IC card
- 301: Second transmission-reception unit
- 302: Domain information holding unit
- 303: Terminal ID obtainment unit
- 304: Domain information processing unit
- 305: Extra-domain usage rule holding unit
- 306: Extra-domain usage rule obtainment unit
- 307: Extra-domain use record accumulation unit
- 308: Extra-domain use record updating unit
- 309: Extra-domain use permission judgment unit

### Best Mode for Carrying Out the Invention

The secure system in the present invention includes secure devices which hold confidential data, and a plurality of terminal apparatuses which use the secure device. It is structured so that, aside from a terminal apparatus within a domain, a user can use a secure device, although conditionally, even in a terminal apparatus outside the domain. Here, domain refers to a group of terminal apparatuses and secure devices that share a license or a content. When the user connects a secure device belonging to a domain A to a terminal apparatus belonging to the domain A, the terminal device is able to unconditionally use the secure device. Aside from this, when it is connected to a terminal apparatus belonging to a domain B, such terminal apparatus is also able to use the secure device within the limit of the extra-domain usage rules. The first embodiment shall be described with a content use system as the secure system, and an IC card as the secure device.

### (First Embodiment)

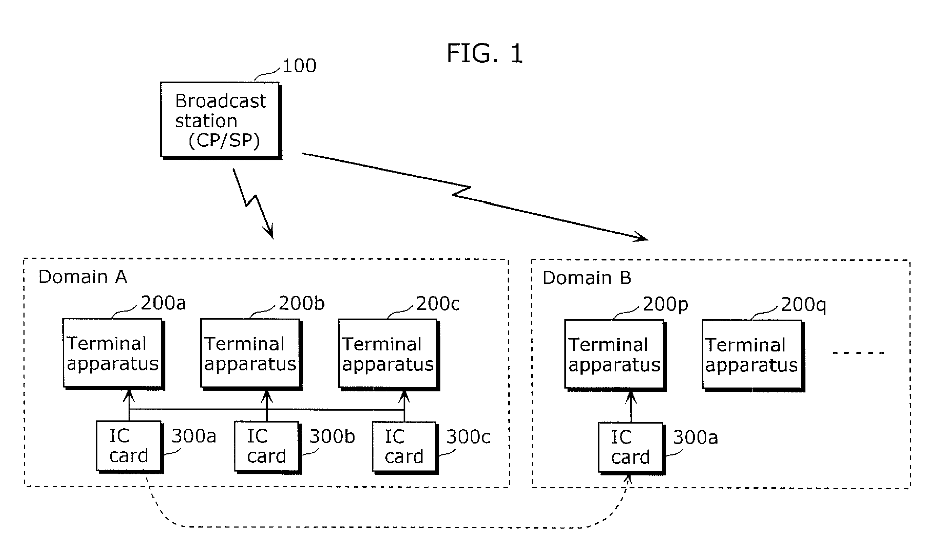

FIG. 1 is a diagram showing the outline of the content use system in the first embodiment of the present invention. As shown in the diagram, the present content use system includes a broadcast station 100, terminal apparatuses 200a to 200c, terminal apparatuses 200p and 200q, and IC cards 300a to 300c as secure devices. It is structured so that, aside from terminal apparatuses inside the domain, a user can also use an IC card, conditionally, in a terminal device outside the domain and view a content. For example, in the case where the user inserts the IC card 300a belonging to domain A into the terminal apparatus 200p belonging to domain B, the terminal apparatus 200p can reproduce the content within the limit of the extra-domain usage rule.

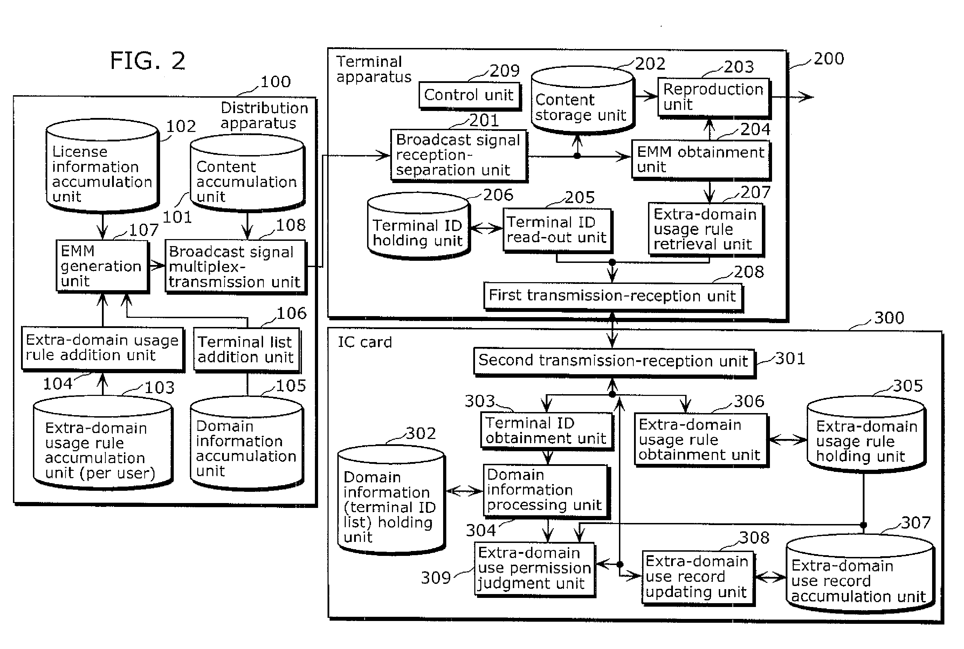

FIG. 2 is a block diagram showing the overall structure of the content use system. As shown in the diagram, the present content use system includes a distribution apparatus 100, a terminal apparatus 200, and an IC card 300.

The distribution apparatus 100 corresponds to the broadcast station 100 in FIG. 1, and is a provider referred to as a content provider or service provider. It broadcasts a content securely through server-type broadcasting using a limited reception format or a limited reproduction format. The distribution apparatus 100 includes a content accumulation unit 100, a license information accumulation unit 102, an extra-domain usage rule accumulation unit 103, an extra-domain usage rule addition unit 104, a domain information accumulation unit 105, a terminal list addition unit 106, an EMM generation unit 107, and a broadcast signal multiplex-transmission unit 108.

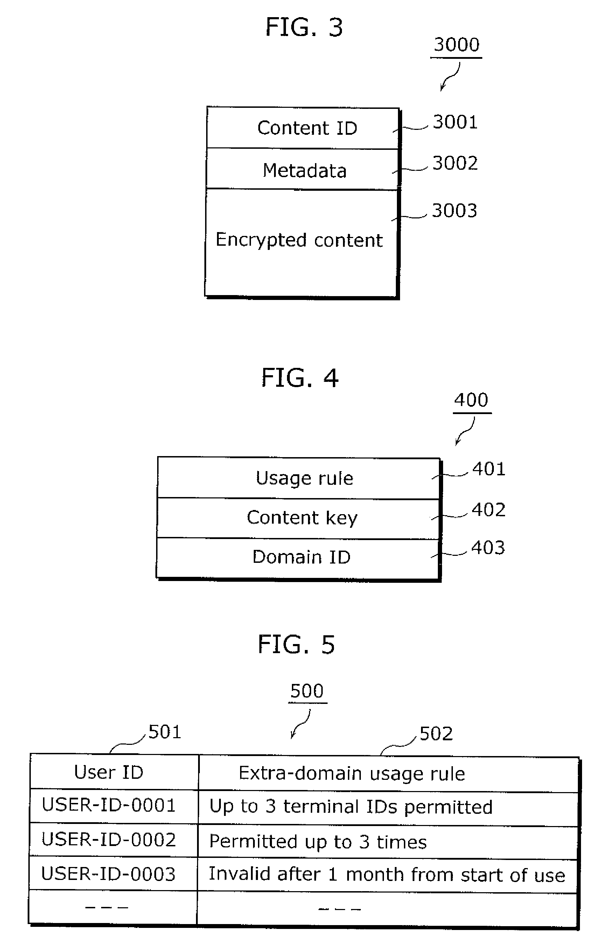

The content accumulation unit 101 accumulates content data 3000 such as that shown in FIG. 3. As shown in FIG. 3, the content data 3000 is made up of a content ID 3001, metadata 3002, and an encrypted content 3003. The content ID 3001 is an ID for uniquely identifying a content, within a digital content distribution system. The metadata 3002 is data for describing the details of the content, and the content's title, length, and so on, are described. The encrypted content 3003 is a content, such as music data or video data, that has been encrypted. Moreover, the content is not limited to music data and video data, and may also be a digital content such as an electronic newspaper, an electronic book, an electronic map, an electronic dictionary, a still picture, a game, and computer software.

The license information accumulation unit 102 accumulates a license 400, as shown in FIG. 4, which is necessary for the reproduction of the content, and an encryption key, referred to as a work key, which is necessary for the decryption of the encrypted license 400. As shown in FIG. 4, the license 400 is made up of a usage rule 401 indicating a content usage rule for the terminal apparatus 200 inside the domain, a content key 402 corresponding to the license 400 and intended for the decryption of the encrypted content, and a domain ID 403 which identifies domains which may share the license 400. Here, the permitted number of uses (for example, "10 times") as well as the permitted use period (for example "January 1, 2004 to May 30, 2004) for the content corresponding to the license 400 are given as an example of the usage rule 401. Moreover, in the same diagram, instead of including the domain ID 403, or together with the domain ID 403, the license 400 may also include a user ID, a terminal apparatus ID and an IC card ID, that can uniquely identify the user, the terminal apparatus, and the IC card, respectively. In addition, in order to form an association with a content ID 3001, the license 400 may also include the content ID 3001. Instead of including the content ID 3001 in the license 400, the license 400 may include a license ID or the like for uniquely identifying the license 400. Furthermore, the work key is accumulated with an association with the provider, and is updated on a regular basis through an EMM or the like.

The extra-domain usage rule accumulation unit 103 accumulates domain usage rules for the terminal apparatus outside the domain, as an extra-domain usage rule table 500. As shown in FIG. 5, a user ID 501 and an extra-domain usage rule 502 are accumulated, in association with each other, in the extra-domain usage rule table 500. The user ID 501 is an ID which uniquely identifies a user, within the present content distribution system. The user ID 501 is assigned when the provider performs a member registration process, in order to receive a content distribution service. This member registration process can be performed through a user's communication with the provider over a network, or by other methods such as the sending of documents for membership registration. In the member registration process, first, the provider assigns a user ID 501 for the user. Subsequently, the terminal ID of the terminal apparatus 200 possessed by the user is notified to the provider via the network, documents, or the like. Such notified terminal ID and the user ID 501 are managed in association with each other. Furthermore, assignment of an IC card ID and a domain ID are performed in the same way, as necessary, after the member registration. The extra-domain usage rule 502 defines the condition for the use of the IC card 300 with a terminal apparatus outside the domain. It defines the following as extra-domain usage rules: the number of content reproductions; the number of extra-domain content use apparatuses for which use is permitted; the number of domains for which use permitted; the expiry date; the period of validity; the maximum permitted use period; the number of terminal IDs; the number of domain IDs; the number of contents; the number of licenses (content keys); and so on. For example, an extra-domain usage rule 502 of "up to 3 terminal IDs permitted for the terminal apparatuses for which use is to be allowed" is provided for a user identified by a user ID "USER-ID-0001". In addition, an extra-domain usage rule of "Permitted up to 3 (times)" is provided for a user identified by a user ID "USER-ID-0002". An extra-domain usage rule of "Invalid after 1 month from start of use", in other words, valid outside the domain for one month starting from the first use in a certain terminal, is provided for a user identified by a user ID "USER-ID-0003". Within the limit of permitted use indicated by these extra-domain usage rules, the user can use the content even on a terminal apparatus outside the domain of the IC card possessed by the user. Moreover, the extra-domain usage rule may contain plural conditions. In such case, the usability according to the extra-domain usage rule can be judged according to the "AND (usable when all of the plural conditions are satisfied)", or "OR (usable when any of the plural conditions are satisfied)" of the plural conditions.

The extra-domain usage rule addition unit 104 adds the extra-domain usage rule 502 to the EMM (Entitlement Management Message) generated by the EMM generation unit 107. Here, EMM is a message which includes user-specific contract information, a work key for decrypting a content key, and the like. In contrast to common information (ECM: Entitlement Control Message), it is also referred to as individual information. In addition, ECM is a message which includes information that is common to all users, such as program information and a license (a content key). As the EMM is transmitted to users on an individual basis, the extra-domain usage rule addition unit 104 in the present embodiment adds the extra-domain usage rule 502 to the EMM. Moreover, instead of adding the extra-domain usage rule 502 to the EMM, the extra-domain usage rule addition unit 104 may add the extra-domain usage rule 502 to a different message or an exclusive message.

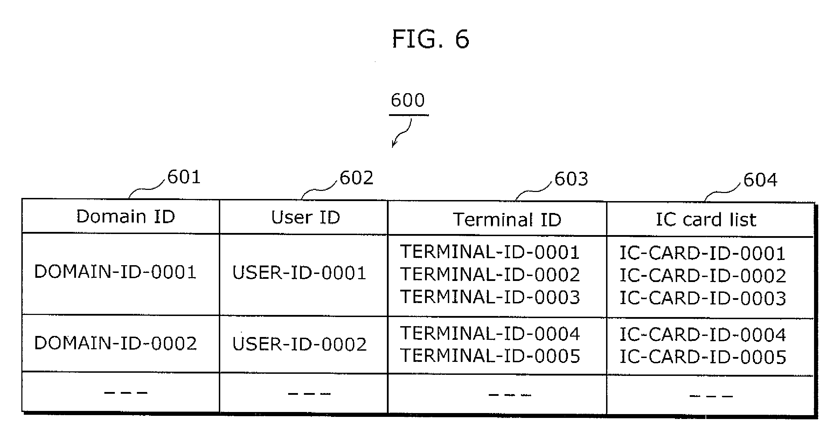

The domain information accumulation unit 105 is a data base for domain management, having a domain information table which associates users with terminal apparatuses and IC cards belonging to domains and, as shown in FIG. 6, includes a domain ID 601, a user ID 602, a terminal list 603 and an IC card list 604. The domain ID 601 is an identifier which uniquely identifies a domain. The user ID 602 is an identifier of a user using a domain. The terminal list 603 is a listing of terminal apparatus IDs, each indicating a terminal apparatus 200 belonging to a domain. The IC card list 604 is a listing of IC card IDs, each identifying an IC card 300 belonging to a domain. The IC card list 604 is a list of IC card IDs, each identifying an IC card belonging to a domain. Registration of a terminal apparatus 200 and IC card 300 into the domain information table is carried out, as necessary, after membership registration. Moreover, the domain information table may also include for each domain ID, the name and nickname of the domain. Furthermore, a domain may be defined by the terminal apparatus ID and the IC card ID (hereinafter referred to as logical domain), and may also be defined by the position at which the terminal apparatus exists (hereinafter referred to as physical domain). The domain information table shown in FIG. 6 is an example of a logical domain.

The terminal list addition unit 106 adds the domain information accumulated in the domain information accumulation unit 105 to the EMM generated by the EMM generation unit 107 and which is to be transmitted to the user's terminal apparatus. With this, the terminal apparatus 200 receiving the EMM, and the IC card 300, can carry out domain management.

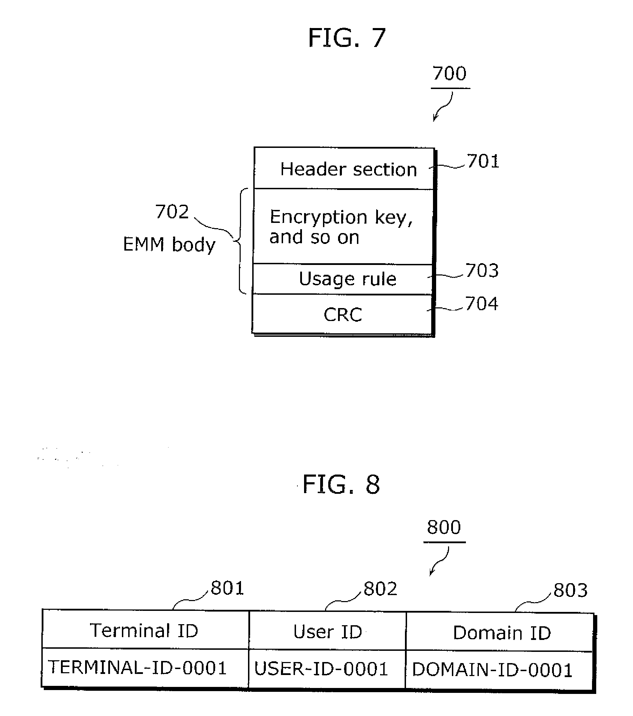

The EMM generation unit 107 generates the EMM mentioned above. The extra-domain usage rule addition unit 104 adds the extra-domain usage rule 502, and the terminal list addition unit 106 adds domain information, to the generated EMM. FIG. 7 shows an example of an EMM. As shown in the diagram, an EMM 700 is made up of a header section 701, an EMM body 702, and a CRC 704, and is data in the MPEG-2 Systems (IEC/ISO13818-1) private section format. The EMM body 702 includes a work key for decrypting the content key 402, and individual information such as private data. A usage rule 703 is added inside the EMM body 702 by the extra-domain usage rule addition unit 104, as private data. Furthermore, the terminal list addition unit 106 adds a terminal list to the EMM body 702, as private data. Moreover, the EMM 700 is encrypted using an IC card 300-specific master key.

The broadcast signal multiplex-transmission unit 108 multiplexes and broadcasts the EMM 700 generated by the EMM generation unit 107, and the content to be distributed from the content accumulation unit 101, and so on. The resulting broadcast data is transmitted, in the case of digital broadcasting, using a format such as an MPEG-2 transport stream (Transport Stream referred to hereinafter as TS). Although various data in the section format such as ECM are included in the multiplexed broadcast data, description of data which is of little relevance to the present invention shall be omitted.

Next, the structure of the terminal apparatus 200 shall be described. As shown in FIG. 2, only one the terminal apparatus 200 is illustrated as a representative of the terminal apparatuses 200a to 200c in FIG. 1. The terminal apparatus 200 includes a broadcast signal reception-separation unit 201, a content storage unit 202, a reproduction unit 203, an EMM obtainment unit 204, a terminal ID read-out unit 205, a terminal ID holding unit 206, an extra-domain usage rule retrieval unit 207, a first transmission-reception unit 208, and a control unit 209.

The broadcast signal reception-separation unit 201 receives the broadcast data transmitted by the distribution apparatus 100, and separates from the received data, the content, the EMM 700 including the extra-domain usage rule 502, and other section format data such as PSI/SI (Program Specific Information/Service Information).

The content storage unit 202 stores, as a partial TS, the content separated by the broadcast signal reception-separation unit 201. Furthermore, in the case of a type II (file-type) content in a server-type broadcast, the content storage unit 202 accumulates a time stamped TS, JPEG, and the so on.

The reproduction unit 203 decrypts and then reproduces the content stored in the content storage unit 202. As the content stored in the content storage unit 202 is encrypted, the reproduction unit 203 performs the decryption using the content key and the work key for undoing the encryption of the content key, and in addition expands (decodes) MPEG-2-compliant compressed codes and the like. As such, the reproduction unit 203 obtains the content key from the ECM, and the work key is supplied to the reproduction unit 203, from the IC card 300 via the first transmission-reception unit 208.

Moreover, although an example of the case where the reproduction unit 203 decrypts the content using the content key and the work key is illustrated here, it is also possible to have an ECM/EMM decryption unit included in the IC card 300, for decrypting the ECM and the EMM, and have the ECM and the EMM decrypted by such ECM/EMM decryption unit. In this case, the work key is obtained by decrypting the EMM using the ECM/EMM decryption unit, and the work key is held inside the IC card. Furthermore, when reproducing the content, the reproduction unit 203 transmits, to the IC card 300, the ECM multiplexed in the content, and the content key is obtained through the decryption of the ECM by the ECM/EMM decryption unit using the work key. The content key obtained in the aforementioned manner is transmitted to the terminal apparatus 200, and the encrypted content is decrypted in the reproduction unit 203, using the content key.

The EMM obtainment unit 204 obtains the EMM 700 separated by the broadcast signal reception-separation unit 201, and outputs the EMM body 702 to the extra-domain usage rule retrieval unit 207.

The terminal ID read-out unit 205 reads out the terminal ID of the terminal apparatus 200, held in the terminal ID holding unit 206, and outputs the read-out terminal ID to the IC card 300 via the first transmission-reception unit 208.

The terminal ID holding unit 206 holds terminal ID information of the terminal apparatus 200. FIG. 8 shows an example of the terminal ID information held by the terminal ID holding unit 206. In the example in FIG. 8, terminal ID information 800 includes a terminal ID 801 which identifies the terminal apparatus 200, a user ID 802 which identifies the user of the terminal apparatus 200, and a domain ID 803 which identifies the domain to which the terminal apparatus 200 belongs.

In the case where an intra-domain IC card 300 is inserted in the IC card slot of the terminal apparatus 200, the extra-domain usage rule retrieval unit 207 retrieves and holds internally, the extra-domain usage rule 502 and the terminal list 603 from the EMM body 702 obtained by the EMM obtainment unit 204, and in addition, transmits the EMM body 702 to the IC card 300 via the first transmission-reception unit 208.

The first transmission-reception unit 208 is an interface for communicating with the IC card 300 which is inserted in the IC card slot.

The control unit 209 performs control for accepting the supply of an encryption key from the intra-domain IC card 300, and control for accepting the supply of an encryption key from an extra-domain IC card 300. The encryption key is supplied from the extra-domain IC card 300, in accordance with the extra-domain usage rule 502.

Next, the structure of the IC card 300 shall be described. Only one IC card 300 is illustrated as a representative of the IC cards 300a to 300c in FIG. 1. As shown in FIG. 2, the IC card 300 includes a second transmission-reception unit 301, a domain information holding unit 302, a terminal ID obtainment unit 303, a domain information processing unit 304, an extra-domain usage rule holding unit 305, an extra-domain usage rule obtainment unit 306, an extra-domain use record accumulation unit 307, an extra-domain use record updating unit 308 and an extra-domain use permission judgment unit 309.

The second transmission-reception unit 301 is an interface for communicating with the terminal apparatus 200 when the IC card 300 is inserted into the IC card slot of the terminal apparatus 200.

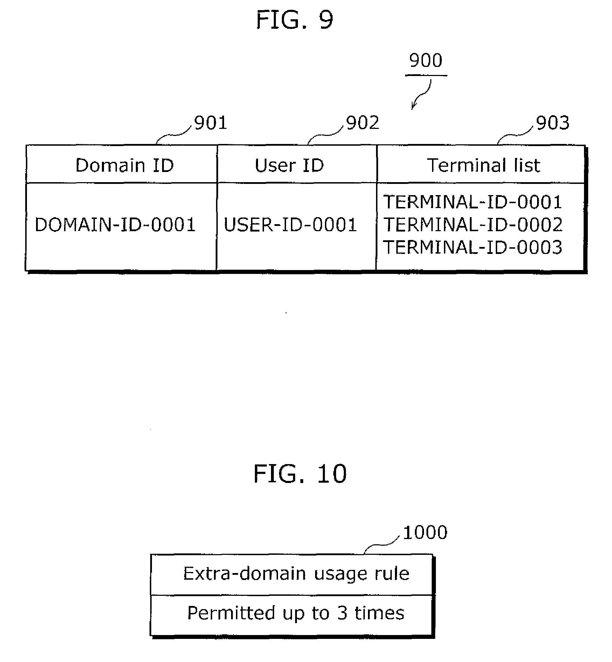

The domain information holding unit 302 holds domain information indicating the terminal apparatus 200 belonging to the domain of the IC card 300. Such domain information includes the terminal ID list, and may or may not include the IC card ID list. FIG. 9 shows an example of the domain information held in the domain information holding unit 302. In the example in FIG. 9, domain information 900 includes: a domain ID 901 which identifies the domain to which the IC card 300 belongs; a user ID 902 which identifies the user of the IC card 300; and a terminal list 903 which indicates the terminal apparatus 200 belonging to the domain identified by the domain ID 901. Moreover, it may also, in addition, manage the maximum values for the number of registrations, duration, size, and so on, of the terminal ID list and IC card ID list. Furthermore, at this time, when the maximum value is reached, it may also delete/overwrite starting from old items and items which are infrequently used.

The terminal ID obtainment unit 303 obtains a terminal ID 801 of the terminal apparatus 200 to which the IC card 300 is inserted.

The domain information processing unit 304 judges whether or not the terminal ID 801 obtained by the terminal ID obtainment unit 303 is included in the terminal list 903 held by the domain information holding unit 302. In other words, the domain information processing unit 304 judges whether the terminal apparatus 200 provided with the IC card 300 is an intra-domain terminal apparatus 200 or an extra-domain terminal apparatus 200.

The extra-domain usage rule holding unit 305 holds the extra-domain usage rule 502 obtained from the terminal apparatus 200 via the second transmission-reception unit 301 and extra-domain usage rule obtainment unit 306. FIG. 10 shows an example of the extra-domain usage rule 502 held in the extra-domain usage rule holding unit 305. In the example in the diagram, a rule of "Permitted up to 3 times" is held in an extra-domain usage rule 1000, as the content's limit of permitted use in an extra-domain terminal apparatus. In this case, the user of the present IC card can use the content in an extra-domain terminal 200 for up to three times.

The extra-domain usage rule obtainment unit 306 obtains the work key, the terminal list and the extra-domain usage rule 502 from the EMM body 702 obtained from the terminal apparatus 200 via the second transmission-reception unit 301. It then holds the work key and terminal list internally, and stores the usage rule in the extra-domain usage rule holding unit 305.

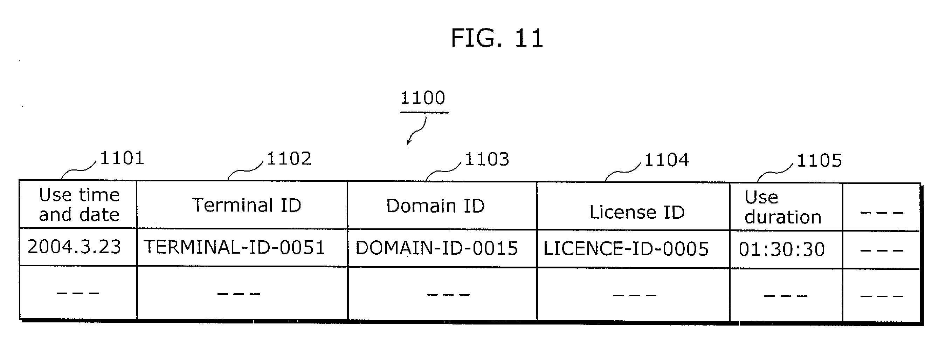

The extra-domain use record accumulation unit 307 accumulates, in the case where the content is used in an extra-domain content use apparatus according to the extra-domain usage rule 502, a record of such use as an extra-domain use history. FIG. 11 shows an example of the use record. In the example in the diagram, a use record 1100 includes a use date and time 1102, a terminal ID 1102 which identifies the extra-domain terminal apparatus 200 using the IC card 300, a domain ID 1103 which identifies the domain, a license ID 1104 for identifying the license used, and a use duration 1105 indicating the actual duration of use.

The extra-domain use record updating unit 308 performs deletion and addition of use records (extra-domain use history) on the extra-domain use record accumulation unit 307. More specifically, upon receiving a delete command from the terminal apparatus 200, the extra-domain use record updating unit 308 erases all the use records accumulated in the extra-domain use record accumulation unit 307 after transmitting them to the terminal apparatus 200. The reason for deleting the use records is to enable the extra-domain use of IC card by the user again, within the limit of the extra-domain usage rule. Furthermore, with regard to the use of the content based on the extra-domain usage rule 502, in the extra-domain terminal apparatus 200, the extra-domain use record updating unit 308 updates the use record by recording the record for such use into the extra-domain use record accumulation unit 307. This use record is, for example, one entry in the use record shown in FIG. 11. Note that although, here, the use record accumulated in the extra-domain use record accumulation unit 307 is transmitted to the terminal apparatus 200 upon receiving a delete command from the terminal apparatus 200, such transmission is not always necessary.

When it is judged by the domain information processing unit 304 that the terminal apparatus 200 provided with the IC card 300 is an extra-domain terminal apparatus 200, the extra-domain use permission judgment unit 309 judges whether or not use is permitted for such terminal apparatus. This judgment is based on whether or not the use record accumulated in the extra-domain use record accumulation unit 307 exceeds the limit of permitted use indicated in the extra-domain usage rule. In addition, when it is judged that the use is permitted, the extra-domain use permission judgment unit 309 notifies such fact to the terminal apparatus 200 provided with the IC card, via the second transmission-reception unit 301, and commands the extra-domain rule obtainment unit 306 to supply a work key to the terminal apparatus 200. By receiving the supply of such work key, the content can be reproduced in the extra-domain terminal apparatus 200.

Hereinafter, the operation of the content use system in the first embodiment of the present invention, structured in the aforementioned manner, shall be described.

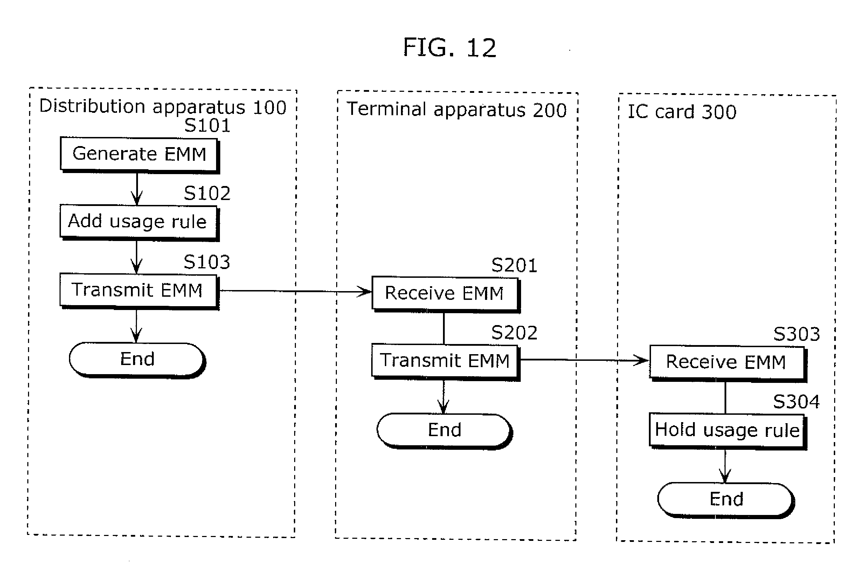

FIG. 12 is a flowchart showing the process for setting the extra-domain usage rule in the IC card 300, in the present content use system. As shown in the diagram, in the distribution apparatus 100, the EMM generation unit 107 generates the EMM 700 (S100). The extra-domain usage rule addition unit 104 reads out, from the extra-domain usage rule accumulation unit 103, the extra-domain usage rule 502 corresponding to the user who is the subject of the EMM 700, and attaches this to the generated EMM 700 (S102). The broadcast signal multiplex-transmission unit 108 multiplexes, together with the content, the EMM 700 to which the extra-domain usage rule 502 has been added, and transmits the multiplexed result to the terminal apparatus 200, as broadcast data (S103).

In the terminal apparatus 200, the broadcast data reception-separation unit 201 receives the broadcast data and separates the EMM body 702 (S201). The separated EMM body 702 is, in addition, transmitted to the IC card 300 via the extra-domain usage rule retrieval unit 207 and the first transmission-reception unit 208 (S202).

In the IC card 300, the second transmission-reception unit 301 receives the EMM body 702, and outputs such EMM body 702 to the extra-domain usage rule obtainment unit 306 (S303). The extra-domain usage rule obtainment unit 306 extracts the work key from the EMM body 702 and holds the extracted work key internally. In addition, it extracts the extra-domain usage rule 502, and stores it in the extra-domain usage rule holding unit 305 (S304).

In this manner, by being added to the EMM 700 in the distribution apparatus 100, the extra-domain usage rule 502 created by a provider and the like, is set inside the IC card 300 via the terminal apparatus 200.

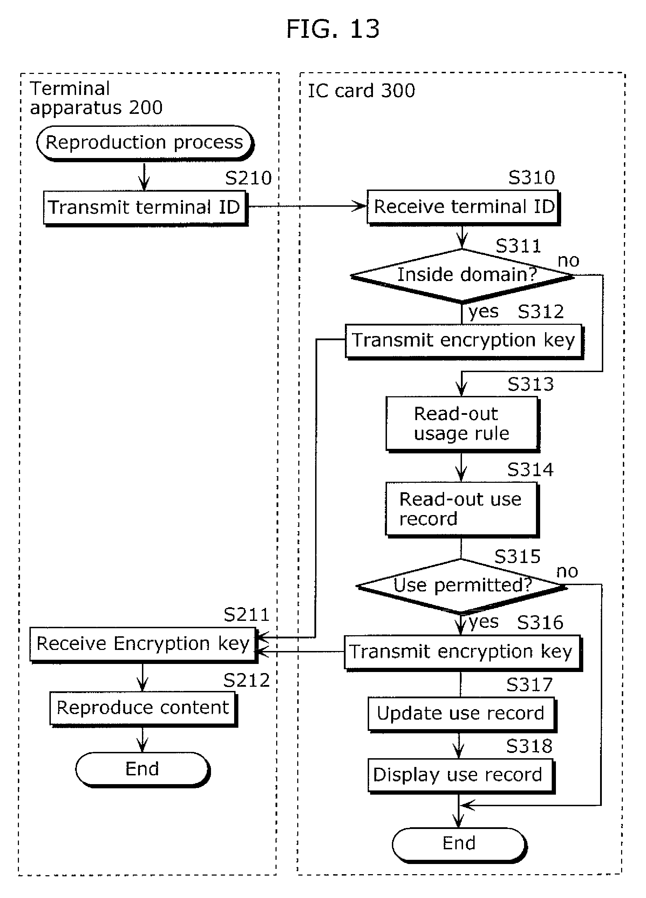

FIG. 13 is a flowchart showing the content reproduction process in the terminal apparatus 200 into which the IC card 300 is inserted, when the user carries out the operation to start reproduction. As shown in the diagram, in the terminal apparatus 200, the terminal ID read-out unit 205 transmits, to the IC card 300 via the first transmission-reception unit 208, the terminal ID 801 held by the terminal apparatus 200, which is read-out from the terminal ID holding unit 206 (S210). Subsequently, when the first transmission-reception unit 208 receives the supply of the encryption key (work key) from the IC card 300 (S211), the reproduction unit 203 decrypts the content key using the work key, and decrypts the content using the decrypted content key, and in addition, reproduces the content which is already a plain text (S212).

At the same time, in the IC card 300, the terminal ID obtainment unit 303 receives the terminal ID 801 via the second transmission-reception unit 301 (S310). By judging whether or not the terminal ID 801 obtained by the terminal ID obtainment unit 303 is included in the terminal list 903 held in the domain information holding unit 302, the domain information processing unit 304 judges whether the terminal apparatus 200 provided with the IC card 300 is an intra-domain terminal apparatus 200 or an extra-domain terminal apparatus 200 (S311). In the case where it is judged by the domain information processing unit 304 that it is an intra-domain terminal apparatus 200, the extra-domain usage rule obtainment unit 306 supplies the held work key, to the terminal apparatus 200 via the second transmission-reception unit 301 (S312).

In the case where it is judged by the domain information processing unit 304 that it is an extra-domain terminal apparatus 200, the extra-domain use permission judgment unit 309 reads out the extra-domain usage rule 502 from the extra-domain usage rule holding unit 305 (S313), reads out the extra-domain use history (the use record 1100) from the extra-domain usage rule holding unit 305 (S314), and judges whether or not use of the IC card 300 on such terminal apparatus 200 is permitted (S315). When it is judged that use is not permitted, the IC card 300 ends this process. When it is judged that use is permitted, the extra-domain usage rule obtainment unit 306 supplies the held work key, to the terminal apparatus 200 via the second transmission-reception unit 301 (S316). In addition, the extra-domain usage rule record updating unit 308 updates the use record of the extra-domain use record accumulation unit 307 (S317). For this update, the extra-domain usage rule record updating unit 308 (a) obtains, from the terminal apparatus 200, the reproduction time, the content ID, the license ID, and so on, for the content whose reproduction operation in the terminal apparatus 200 is finished, and (b) generates a use record 1100. In addition, the extra-domain usage rule record updating unit 308 transmits the updated use record and the extra-domain usage rule 502 to the terminal apparatus 200 via the second transmission-reception unit 301, and commands the terminal apparatus 200 to display the use record to the user (S318). In accordance with this command, the terminal apparatus 200 may display a guidance regarding the use-status for the extra-domain terminal apparatus, based on the transmitted extra-content usage rule and the use record.

With this type of process, even when the user inserts the IC card 300 into an extra-domain terminal apparatus 200, the content can be viewed in such terminal apparatus, within the limit of the extra-domain usage rule.

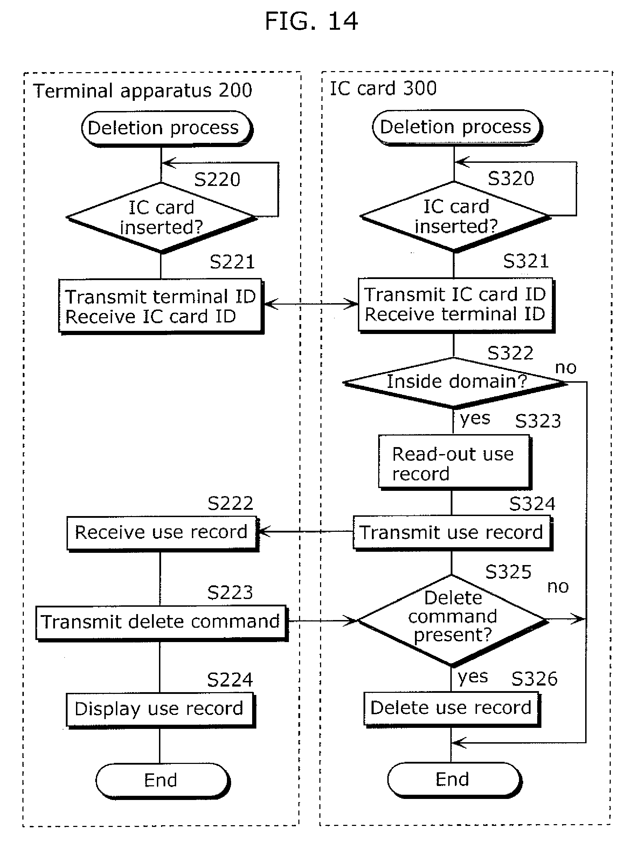

FIG. 14 is a flowchart showing the process for deleting a use record, in the terminal apparatus 200 and the IC card 300. In the terminal apparatus 200, the first transmission-reception unit 208 judges whether an IC card 300 is newly inserted into the IC card slot (S220). When it is judged that an IC card is newly inserted, the first transmission-reception unit 208 transmits the terminal ID 801 read out from the terminal ID holding unit 206 by the terminal ID read-out unit 205, and receives the IC card ID transmitted by the IC card 300 (S221). Subsequently, in the case where the first transmission-reception unit 208 receives the use record 1100 from the IC card 300 (S222) (in the case where the terminal apparatus 200 and the IC card 300 belong to the same domain), the control unit 209 sends a command for deleting the use record 1100, to the IC card 300 via the first transmission-reception unit 208 (S223). In addition, the control unit 209 displays a guidance regarding the use-status for the extra-domain terminal 200, based on the use record 1100.

At the same time, in the IC card 300, the second transmission-reception unit 301 judges whether or not the IC card 300 is newly inserted into an IC card slot (S320). When it is judged that the IC card is newly inserted, the second transmission-reception unit 301 transmits the IC card ID to the terminal apparatus 200, and at the same time, receives the terminal ID 801 transmitted by the terminal apparatus 200 (S321). In addition, the domain information processing unit 304 compares the terminal ID 801 received via the second transmission-reception unit 301 and the terminal ID obtainment unit 303 with the terminal list 903 held in the domain information holding unit 302, and judges whether the terminal apparatus 200 provided with the IC card 300 is an intra-domain terminal apparatus 200 or an extra-domain terminal apparatus 200 (S322). When it is judged to be an extra-domain terminal apparatus, the IC card 300 ends this deletion process. When it is judged to be an intra-domain terminal apparatus, the extra-domain usage record updating unit 308 reads-out the use record from the extra-domain use record accumulation unit 307 (S323), and transmits this to the terminal apparatus 200 via the second transmission-reception unit 301 (5324). In addition, in the case where the second transmission-reception unit 301 receives a delete command from the terminal apparatus 200 (S325), the extra-domain usage record updating unit 308 deletes the use record 1100 inside the extra-domain use record accumulation unit 307 (S326).

With this type of deletion process, it is possible to avoid a situation where the IC card 300 can never be used again, in the case where the IC card 300 is used up (when the limit permitted by the extra-domain usage rule is consumed) in an extra-domain terminal apparatus 200. Furthermore, even in the case where the entirety of the limit permitted by the extra-domain usage rule is not used up, the limit permitted by the extra-domain usage rule can be restored. The deletion process is performed in the case where the IC card 300 is inserted in an in-domain terminal apparatus, as it discourages the user from using the IC card 300 in an extra-domain terminal apparatus 200 for prolonged periods of time (or repeatedly for several times). Accordingly, while, in principle, the user uses the IC card 300 in the inter-domain terminal apparatus, the exceptional use of the IC card 300 in an extra-domain apparatus 200 is made possible.

As described above, according to the content use system in the first embodiment of the present invention, user convenience can be improved as the IC card 300 can also be used, within the limit of the extra-domain usage rule, in a terminal apparatus outside the domain. Moreover, as the extra-domain use of the IC card 300 is not without limit, and is limited according to the extra-domain usage rule 502, right-protection for the provider providing the content is made possible.

Furthermore, by performing the extra-domain use history deletion process when appropriate, the exceptional use of the IC card 300 in an extra-domain apparatus 200 is made possible while, in principle, the user uses the IC card 300 in an inter-domain terminal apparatus.

Next, a variation of the content use system in the present embodiment shall be described.

Note that in the aforementioned first embodiment, the extra-domain usage record updating unit 308 and the extra-domain use permission judgment unit 309 are included within the IC card 300. However, it is also possible to have a structure in which either one is included in the terminal apparatus 200. In the case of the former, the present invention can be applied with minimal changes to the existing terminal apparatus 200. In the case of the latter, the present invention can be applied with minimal change to the existing IC card 300. Furthermore, it is also possible to have a structure in which they are included in both the terminal apparatus 200 and the IC card 300.

Note that although the aforementioned embodiment shows an example of the case where the extra-domain usage rule is set in the IC card 300, using the EMM in digital broadcasting, the present invention is not limited to such. It is also possible to set the extra-domain usage rule in the IC card 300, using an ECM (Kc transmission ECM, ECM-Kw, ECM-Kc) or ACI (Account Control Information) in digital broadcasting, a Kc transmission EMM, a group-addressed EMM, and the like, and it can also be set through a communication route such as the Internet. In addition, aside from the IC card 300, setting in the terminal apparatus 200 is also possible.

Furthermore, in the aforementioned embodiment, the use record is deleted when the IC card 300 is inserted in any terminal apparatus 200 inside the same domain. However, it is also possible to have the deletion performed only upon insertion into the IC card slot of a specific terminal apparatus 200. In such case, the transmission of the delete command of step S223 in FIG. 14 is performed only by the specific terminal apparatus 200 using the terminal apparatus ID 801, the IC card ID and so on, and not by other terminal apparatuses 200.

In addition, it is possible to have the delete command transmitted to the IC card by a specific terminal apparatus 200 in a specific domain, regardless of whether it is inside the domain or outside the domain.

Furthermore, in the aforementioned embodiment, the extra-domain use history is deleted when the IC card 300 is inserted into the IC card slot of the terminal apparatus 200. However, aside from this, it is also possible to delete the extra-domain use history in the terminal apparatus 200 or IC card 300, at the point when the content or license is used. The content and license at this point may be limited to a specific content and a specific license.

Furthermore, it is also possible to have the extra-domain use record updating unit 308 delete the use record 1100, even without the delete command from the terminal apparatus 200. It is also possible to delete periodically, such as once a month, for example, or to delete each time the content is used N times (for example, 10 times). In this case, the frequency of deletion may be fixed depending on the limit of the extra-domain usage rule 502. Moreover, the frequency of deletion in this case may be designated through the extra-domain usage rule 502.

Furthermore, in deleting the extra-domain use history, the distribution apparatus 100 may make the deletion command through communications and broadcasts. In this case, it is possible to have the extra-domain usage rule deleted only when the IC card 300 is inserted into an intra-domain terminal apparatus 200.

Note that in the aforementioned embodiment, the extra-domain usage rule 502 is set into the IC card 300, from the distribution apparatus 100 via the terminal apparatus 200. However, the extra-domain usage rule holding unit 305 may hold a default extra-domain usage rule (may be preset at the time of shipment, or generated internally through a specific method), and it may also receive the setting for the extra-domain usage rule stored by default in the terminal apparatus 200.

Furthermore, upon receiving the display command for the use record 1100 in step S318 in FIG. 13, the terminal apparatus 200 may display such guidance as the following:

(a) a guidance regarding the use-status for the extra-domain terminal apparatus 200 based on the extra-domain usage rule and the extra-domain use history (use record);

(b) a guidance prompting the deletion of the use record, when the use record reaches the limit of permitted use indicated in the extra-domain usage rule;

(c) a guidance depicting a help message showing the method for deleting the use record (for example, "Insert IC card in terminal apparatus AAA, and delete";

(d) a guidance for stating when the difference between the use record and the limit of permitted use indicated in the extra-domain usage rule is below a fixed level (for example, "Only one more use permitted outside the domain", "Only use of content A permitted outside the domain", "Use permitted outside the domain only in domain B", and so on);

(e) a guidance showing the difference between the use record and the limit of permitted use indicated in the extra-domain usage rule;

(f) a guidance stating when the use record reaches the limit of permitted use indicated in the extra-domain usage rule (for example, "Further use outside the domain not permitted");

(g) changing at least one of the size or color of the guidance display as the difference between the use record and the limit of permitted use indicated in the extra-domain usage rule decreases;

(h) changing, as a guidance, the state of the output of at least one of the light emitter and sound output unit included in the terminal apparatus 200, depending on the use-status;

(i) displaying a guidance according to an updatable schedule from an outside source (for example, every one month, upon activation, upon IC card ID registration/cancellation, upon IC card insertion, and so on);

(j) a guidance showing the condition of the IC card (for example, the memory capacity within the IC card, the available capacity therein, the profile that is set (user ID, domain ID, IC card ID, and so on), the number of licenses held (the number of content keys or work keys), the available capacity for content holding); and

(k) a guidance stating that the IC card 300 and the terminal apparatus 200 belong to different domains.

Note that the aforementioned (a) to (k) message displays may be carried out according to the operation of the user. In addition, it is also possible to display the domain ID or domain name to which the terminal apparatus 200 or the IC card 300 belongs. Furthermore, a listing of terminal apparatuses 200 or IC cards 300 belonging to a certain domain may also be displayed. The following may be considered as the display timing for these: upon activation of the terminal 200, upon insertion and removal of the IC card 300, upon registration/cancellation to or from a domain, of a terminal apparatus 200 or IC card 300, when the domain to which the terminal apparatus 200 and IC card 300 belong are different, and so on.

Furthermore, it is also possible to display a message prompting the registration/cancellation of the terminal apparatus 200 or IC card 300 to or from a domain.

Furthermore, in the case where the delete command is not transmitted in step S222 in FIG. 14, the aforementioned (a) to (k) guidance display may be carried out in step S224.

Furthermore, the terminal apparatus 200 or the IC card 300 may include a storage unit for previously storing the messages for each aforementioned guidance, and it is also possible for these to be updated dynamically from the broadcast station 101 through a digital broadcast and communications route. Alternatively, the updating may also be done according to a user setting.

Moreover, in step S316 in FIG. 13, the IC card 300 may supply the content key. In addition, the guidance display may be used as a means to confirm whether or not the use is permitted for a combination of the terminal apparatus 200 and the IC card 300, without supplying the work key, by merely replying with a message stating that use is permitted.

Furthermore, for terminal apparatuses 200 or IC cards 300 making up a domain, affiliation to the domain may be managed using expiry dates.

Furthermore, the aforementioned embodiment of the present invention shows an example for the case where the control according to the extra-domain usage rule 502 is applied to all the terminal apparatuses 102 and IC cards 300. However, it is possible to provide a group made up of the terminal apparatus 200 and the IC card 300, or pluralities of terminal apparatuses 200 and IC cards 300 which are the subject of such a control.

Note that in the case where license management is carried out in the terminal apparatus 200 or IC card 300, it is possible to have a differentiation between a license obtained inside the domain and a license obtained outside the domain. Furthermore, the terminal apparatus 200 or the IC card 300 may control the license obtainment outside the domain. However, the license here refers to, at least, a data structure including a usage rule and a content key of a content.

Furthermore, the extra-domain usage rule holding unit 305 may hold a plurality of extra-domain usage rules 502. In this case, the extra-domain use permission judgment unit 309 may select depending on the situation. For example, the extra-domain usage rule 502 may be selected on a per-domain or per-content basis. Furthermore, the extra-domain use permission judgment unit 309 may select a plurality of extra-domain usage rules 502, and judge by AND-rules or OR-rules.

In addition, the extra-domain use permission judgment unit 309 may judge whether use is permitted, by interpreting the extra-domain usage rule strictly or loosely depending on the situation. The interpretation of the extra-domain usage rule 502 at this time may be converted, for example, into a numeric value fifty percent higher or fifty percent lower than a numeric value representing the extra-domain usage rule. Furthermore, the above-mentioned situation includes: the license, content and program held by the terminal apparatus 200 or the IC card 300; the service joined; the type/function (grade) of the terminal apparatus 200 and the IC card 300; or a user operation, and so on.

Furthermore, through linkage among the terminal apparatuses 200 or IC cards 300 belonging to the same domain, the extra-domain usage rule and the extra-domain use history may be shared and interchanged.

Furthermore, the aforementioned embodiment shows an example of the case for binding the terminal apparatus 200 and the IC card 300. However, it goes without saying that the present invention also applicable in the case for binding a program operating on the terminal apparatus 200 and the IC card 300, the case for binding the terminal apparatus 200 and a program operating on the IC card 300, as well as the case for binding a program operating on the terminal apparatus 200 and a program operating on the IC card 300.

Moreover, the aforementioned embodiment shows an example of the case where the domain control (domain registration/cancellation) for the terminal apparatus 200 and the IC card 300 is carried out in the broadcast station 100. However, it is possible to have a method where the entire domain control is performed locally, and not in the broadcast station 100. It is also possible to have a method in which, although the domain control among the terminal apparatuses 200 or among the IC cards 300 is carried out in the broadcast station 100, the domain control of the terminal apparatus 200 and the IC card 300, as well as the use permission control for a pair of the terminal apparatus 200 and the IC card 300 is performed locally. To be more specific, the following are given:

(A) A terminal apparatus 200 and an IC card 300 holding common information (encryption key, ID, and the like) are placed in the same domain. Common information setting/cancellation may be performed using digital broadcast or communication, and may also be performed locally.

(B) Domain registration is carried out automatically when the IC card 300 is first inserted into the terminal apparatus 200. The domain registration method may be a method which shares the common information, and may also be a method in which the terminal ID or IC card ID is added to a terminal ID list or an IC card list.

(C) The terminal apparatus 200 and the IC card 300 that first uses or obtains the content or license are considered as being in the same domain (registered in the domain).

(D) Control is carried out according to the number of insertions and removals of the IC card 300 into the terminal apparatus 200, as well as the duration of insertion. Moreover, in this case, aside from the timing for using the content, extra-domain usage rule determination may also be carried out, upon the insertion of the IC card 300 to the terminal apparatus 200, as well as upon putting on the power source for the terminal apparatus 200.

Furthermore, with regard to domain control, the bind of the terminal apparatus 200 and the IC card 300 may be changed depending on the license or content held in the IC card 300, and the bind of the terminal apparatus 200 and the IC card 300 may also be changed depending on the license or content to be used.

Furthermore, the domain control between the terminal apparatus 200 and the IC card 300 (control for a pair for which use is permitted) may be performed in conjunction with the domain established among terminal apparatuses 200 or among IC cards 300.

Furthermore, information required for domain control (the common information and the terminal ID list, IC card list) may be obtained from/synchronized with other terminal apparatuses 200 or IC cards 300 belonging to a home network.

Furthermore, information required for domain control may be instructed dynamically from the broadcast station 101 through the digital broadcast and communication routes. In particular, upon receiving the command for registration to/cancellation from the domain, an association may be made for the IC card 300 inserted in the terminal apparatus 200. In the case of communication, secure registration/cancellation can be performed using SAC (Secure Authenticated Channel).

### (Second Embodiment)

The secure system in the present embodiment shall be described in the case where the present invention is applied to a system within an enterprise or household, and the like. Furthermore, a domain shall be described with an example using a physical domain defined by the position, and so on, at which a terminal apparatus is present.

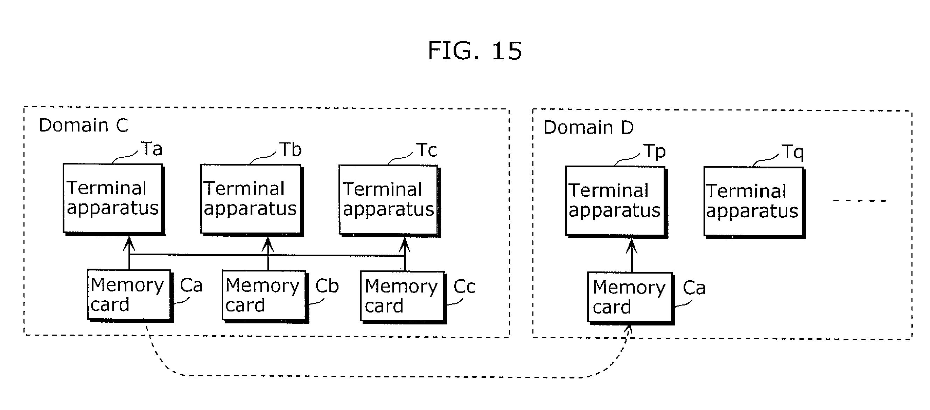

FIG. 15 is a diagram showing the outline of the secure system in the second embodiment of the present invention. As shown in the diagram, the present secure system includes terminal apparatuses Ta to Tc, terminal apparatuses Tp and Tq, and, as secure devices, memory cards Ca to Cc. It is structured so that the user can also use a memory card, conditionally, in a terminal apparatus outside the domain, aside from using it in a terminal apparatus inside the domain.

Domain C and D in the diagram are physically defined domains such as: office and office B, A-wing and B-wing, as well as department A and department B in an enterprise; schoolhouse A and schoolhouse B, as well as a classroom in the first grade and classroom in the second grade within a school; and a terminal group connected to a network A and a terminal group connected to a network B.

The terminal Ta is a personal computer PC, a mobile device (mobile phone, PDA, and the like), and so on, which reads and writes confidential data to and from a memory card. Furthermore, the terminal Ta may also be a reproduction apparatus or recording apparatus such as a set top box, a digital TV, a DVD recorder, a hard disk recorder, and a personal computer, for receiving a digital broadcast using the content use terminal and the security module (IC card) shown in the first embodiment. The same is true for the rest of the terminals Tb, and so on.

The memory card Ca is one type of secure device for securely holding confidential data. For example, there are security protection function-equipped memory cards such as an SD card and a memory stick, and there are also IC card function-equipped memory cards such as a smart SD card, and a MOPASS (MObile PASSport) card. Confidential data, is not limited to the encryption key of a content, but is also a confidential document, an encrypted content (image, sound, still picture), and so on.

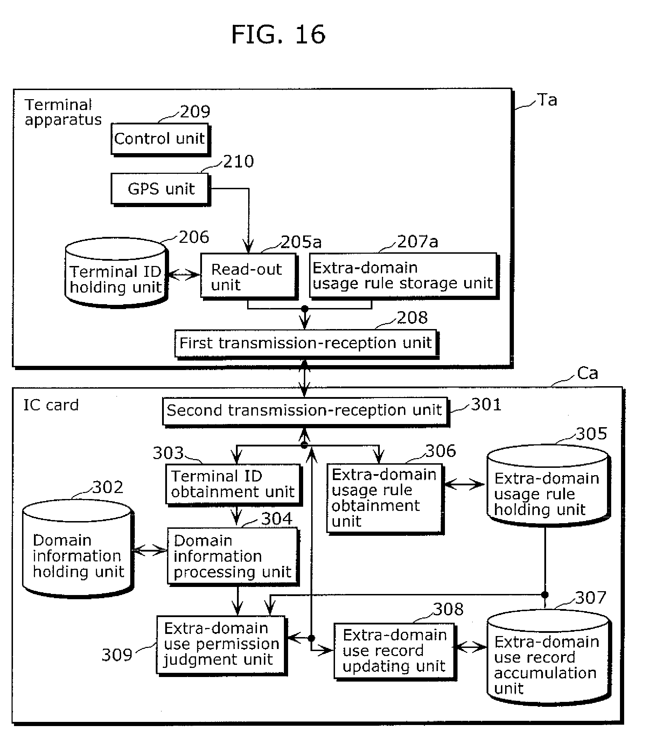

FIG. 16 is a block diagram showing the structure of the terminal apparatus Ta and the memory card. The terminal Ta in the diagram is different compared with the terminal apparatus 200 in FIG. 2 in the following points: having the broadcast signal reception-separation unit 201, the content recording unit 202, the reproduction unit 203, and the EMM obtainment unit 204 removed; having a GPS unit 210 added; including a read-out unit 205a in place of the terminal ID read-out unit 205; and including an extra-domain usage rule storage unit 207a in place of the extra-domain usage rule obtainment unit 207. Furthermore, the memory Ca in the same diagram has approximately the same structure compared with the IC card 300 in FIG. 2, except that the domain definition information held in a domain information holding unit 302 is different. Hereinafter, description shall be made focusing on the points of difference and omitting the points which are the same.

The GPS unit 210 detects the position of a terminal apparatus using a GPS (Global Positioning System) system. The detected position is represented by latitude, longitude, altitude, and so on.

In addition to the functions of the terminal ID read-out unit 205, the read-out unit 205a outputs, together with a terminal ID, information indicating the position detected by the GPS unit 210, to the memory card Ca via a first transmission-reception unit 208.

The extra-domain usage rule storage unit 207a holds an extra-domain usage rule. The extra-domain usage rule is the same as that in the first embodiment.

The domain information holding unit 302 holds domain information indicating a physically defined domain.

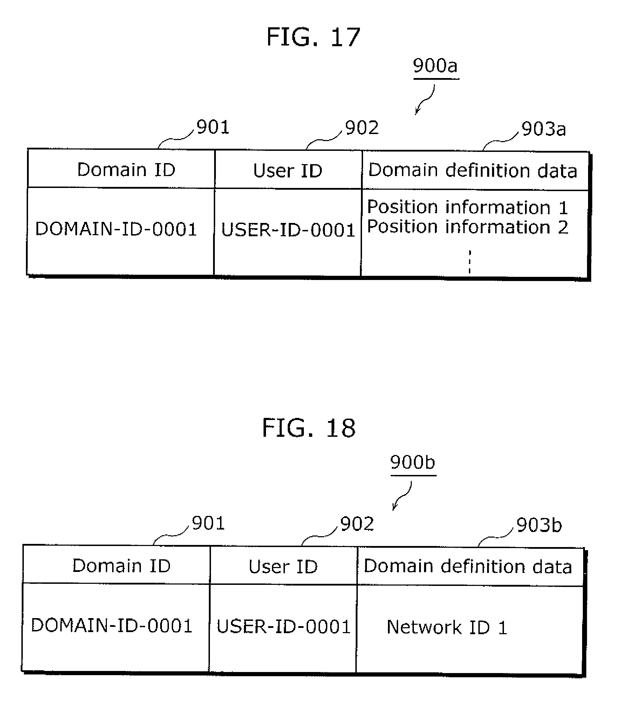

FIG. 17 is a diagram showing an example of domain information held by the domain information holding unit 302. In comparison with the domain information in FIG. 9, the domain information shown in the diagram is set with a group of position information serving as domain definition data, instead of the terminal list. For example, a terminal apparatus present in the area covered by the position information group is judged as being inside the domain. In the case where height is included in the position information, the domain is defined as a three-dimensional area. Moreover, the domain may be defined by a grouping of the position information and radius.

FIG. 18 is a diagram showing another example of domain information held by the domain information holding unit 302. The domain definition data in the diagram includes a network ID. In this case, a terminal apparatus connected to a network specified by the network ID is judged as being inside the domain.

Description shall be made for the case where the secure system in the present embodiment is applied to a terminal apparatus having company premises as a domain, and a memory card which holds a confidential document.

In principle, the user records the company's confidential document (confidential data) in the memory card (secure device), and uses the confidential document in a PC on which company authorized security measures have already been carried out (terminal apparatus Ta), in the company premises (domain). Being inside the company premises is judged according to whether it is inside the domain or outside the domain based on the position detected by the GPS unit 210. As a result of the intra-domain or extra-domain judgment, the confidential document can be used freely when it is inside company premises, and in the case where it is outside company premises, the confidential document can be used exceptionally, although access to the confidential document is limited according to the time limit/limit on the number of times previously recorded in the memory card Ca.

In the case where the extra domain usage rule is used up, the memory card is inserted into the terminal apparatus Ta at the company premises. Upon confirming that it is within the domain, the extra-domain usage rule is reset and extra-domain use is permitted again.

Moreover, the physical domain definition may, for example, be: an area registered previously through the use of GPS; the range within which the electric waves of a wireless LAN, RFID (wireless tag), and so on, can be received; terminal apparatuses that can be confirmed as being connected to a specific network; the range that is reached by sound or light from a specific terminal; and so on. Furthermore, the logical domain definition may be something aside from the terminal apparatus ID/secure device ID list, and for example, may be defined by the domain keys, domain IDs, legion code, the duration/number of times the secure device is inserted and removed. In addition, these may be kept confidential.

In place of judging whether the terminal apparatus and the secure device belong to the same domain, it is also possible to judge whether the terminal apparatus and the secure device each belong to a respective domain. As a result of this judgment, in the case where only one belongs to a domain, two-way authentication may be performed between the terminal apparatus and the secure device in order to securely perform the use permission judgment for the secure device.

Moreover, the domain information holding unit 302 may be included, not only in the IC card Ca, but also in the terminal apparatus Ta, and may also be included only in the terminal apparatus Ta.

Furthermore, the terminal apparatus Ta, and so on, may be structured to include the broadcast signal reception-separation unit 201 and the content storage unit 202 shown in the terminal apparatus 200 in FIG. 2, and receive and store a content, and so on, from an outside source.

Moreover, the terminal apparatus Ta, and so on, may not necessarily hold a terminal ID, nor include a terminal ID read-out unit 205. Furthermore, the terminal ID need not be transmitted to the memory card Ca, and so on.

Furthermore, it goes without saying that the many variations of the content use system in the first embodiment can be likewise applied to the secure system in the present embodiment.

### Industrial Applicability

The present invention is well suited to a secure system which includes a terminal apparatus and a secure device. The present invention is particularly suited to a content use system, a secure device, a content use apparatus, a method and a program, which make use of a secure device that supplies an encryption key that enables content use in a content use apparatus belonging to a domain made up of content use apparatuses sharing the secure device. For example, the present invention is suited to a content reproduction apparatus, a recording apparatus, or a device combining both, such as a set top box, a digital TV, a DVD recorder, a hard disk recorder, and a personal computer for receiving a digital broadcast, using a security module (IC card).

## Claims

1. A secure system including a secure device holding confidential data and a terminal apparatus to which said secure device is connected, said secure system comprising:
a first storage unit included in one of said secure device and said terminal apparatus, and operable to store domain information defining a domain of said secure device and said terminal apparatus;
a second storage unit included in one of said secure device and said terminal apparatus, and operable to store an extra-domain usage rule which is a rule for use of said secure device outside the domain;
a first judgment unit included in one of said secure device and said terminal apparatus, and operable to judge, according to the domain information, whether one of said secure device and said terminal apparatus is currently inside the domain or outside the domain;
a second judgment unit included in one of said secure device and said terminal apparatus, and operable to judge, according to the extra-domain usage rule, whether or not use of said secure device is permitted, in the case where it is judged by said first judgment unit to be outside the domain; and
a control unit included in one of said secure device and said terminal apparatus, and operable to enable the use of said secure device in said terminal apparatus in any of: the case where it is judged by said first judgment unit to be inside the domain; and the case where it is judged by the second judgment unit that use is permitted.

2. The secure system according to Claim 1,
wherein said terminal apparatus is a content use apparatus reproducing an encrypted content,
the confidential data is an encryption key for decrypting the content, and
said control unit is operable to supply the confidential data from said secure device to said terminal apparatus, in any of: the case where it is judged by said first judgment unit to be inside the domain; and the case where it is judged by said second judgment unit that use is permitted.

3. The secure system according to Claim 2,
wherein the extra-domain usage rule concerns at least one of the following extra-domain criteria: (a) the number of content reproductions; (b) the number of content use apparatuses; (c) the number of domains; (d) a validity period; (e) a use duration; (f) the number of terminal IDs; (g) the number of domain IDs; (h) the number of contents; and (i) the number of licenses.

4. The secure system according to Claim 2, comprising
a history recording unit operable to record an extra-domain use history indicating a history of use of the content in a content use apparatus outside of the domain, the use being based on the extra-domain usage rule,
wherein said second judgment unit is operable to judge whether or not the extra-domain use history exceeds a limit of permitted use indicated in the extra-domain usage rule.

5. The secure system according to Claim 2,
wherein said second storage unit and said second judgment unit are included in said secure device.

6. The secure system according to Claim 2,
wherein said second storage unit and said second judgment unit are included in said content use apparatus.

7. The secure system according to Claim 2,
wherein said content use apparatus includes
a reception unit operable to receive a new extra-domain usage rule from an outside source, and
said second storage unit is operable to update the extra-domain usage rule with the new extra-domain usage rule.

8. The secure system according to Claim 7,
wherein said reception unit is operable to receive an extra-domain usage rule added to a license transmitted by a content distribution server.

9. The secure system according to Claim 2,
wherein said content use apparatus further includes:
an obtainment unit operable to obtain the extra-domain usage rule and an extra-domain use history from a secure device inserted into a secure device slot; and
a display unit operable to display a guidance regarding a use status for a content use apparatus outside of the domain, based on the obtained extra-domain usage rule and the extra-domain use history.

10. A secure device connected to a terminal apparatus, and holding confidential data, said secure device comprising:
a rule storage unit operable to store an extra-domain usage rule for said secure device with respect to a terminal apparatus outside of a domain;
a judgment unit operable to judge, according to the extra-domain usage rule, whether or not use of said secure device is permitted; and
a control unit operable to enable the use of said secure device in said terminal apparatus in the case where said judgment unit judges that the use is permitted.

11. The secure system according to Claim 10,
wherein said terminal apparatus is a content use apparatus reproducing an encrypted content,
the confidential data is an encryption key for decrypting the content, and
said control unit is operable to supply the confidential data from said secure device to said terminal apparatus, in the case where it is judged by said judgment unit that use is permitted.

12. The secure device according to Claim 11,
wherein the extra-domain usage rule concerns at least one of the following: (a) the number of content reproductions; (b) the number of content use apparatuses; (c) the number of domains; (d) a validity period; (e) a use duration; (f) the number of terminal IDs; (g) the number of domain IDs; (h) the number of contents; and the number of licenses.

13. The secure device according to Claim 12,
a history recording unit operable to record an extra-domain use history indicating a history of use of the content in a terminal apparatus outside of the domain, the use being based on the extra-domain usage rule,
wherein said judgment unit is operable to judge whether or not the extra-domain use history exceeds a limit of permitted use indicated in the extra-domain usage rule.

14. The secure device according to Claim 13, further comprising
a deleting unit operable to delete the extra-domain use history at a predetermined time.

15. The secure device according to Claim 11, further comprising:
a reception unit operable to receive a new extra-domain usage rule from a terminal apparatus,
wherein said rule storage unit is operable to update the extra-domain usage rule with the new extra-domain usage rule.

16. The secure device according to Claim 11,
wherein said rule storage unit is operable to store a default extra-domain usage rule.

17. The secure device according to Claim 11, further comprising:
a display unit operable to display a use status for a content use apparatus outside of the domain, based on the extra-domain usage rule and the extra-domain use history.

18. The secure device according to Claim 11, further comprising:
a transmission unit operable to transmit a domain ID to a terminal apparatus having a secure device slot into which said secure device is currently inserted.

19. The secure device according to Claim 11, further comprising
a transmission unit operable to transmit the extra-domain use history to a terminal apparatus having a secure device slot into which said secure device is currently inserted.

20. A terminal apparatus to which a secure device holding confidential data is connected, said terminal apparatus comprising:
a storage unit operable to store an extra-domain usage rule which is a usage rule for said secure device with respect to a terminal apparatus outside the domain;
a judgment unit operable to judge, according to the extra-domain usage rule, whether or not use of said secure device is permitted; and
a control unit operable to enable the use of said secure device in said terminal apparatus in the case where said judgment unit judges that the use is permitted.

21. The secure system according to Claim 20,
wherein said terminal apparatus is a content use apparatus reproducing an encrypted content,
the confidential data is an encryption key for decrypting the content, and
said control unit is included in said secure device, and is operable to supply the confidential data from said secure device to said terminal apparatus, in the case where it is judged by said judgment unit that use is permitted.

22. The secure device according to Claim 21,
wherein the extra-domain usage rule concerns at least one of the following: (a) the number of content reproductions; (b) the number of content use apparatuses; (c) the number of domains; (d) a validity period; (e) a use duration; (f) the number of terminal IDs; (g) the number of domain IDs; (h) the number of contents; and the number of licenses.

23. A secure system including a content distribution apparatus, a content use apparatus, and a secure device,
wherein said content distribution apparatus includes a transmission unit operable to transmit, to a content use apparatus, an extra-domain usage rule which is a usage rule for use of said secure device in a content use apparatus outside of a domain,
said secure device includes a supply unit operable to supply an encryption key to a content use apparatus belonging to a domain made up of content use apparatuses which share said secure device, the encryption key enabling content use,
said content use apparatus includes a reception unit for receiving the extra-domain usage rule from said transmission unit,
one of said content use apparatus and said secure device includes:
a first storage unit operable to store domain information defining the domain of said secure device and said terminal apparatus;
a second storage unit operable to store the extra-domain usage rule received by said reception unit;
a first judgment unit operable to judge whether one of said secure device and said terminal apparatus is currently inside the domain or outside the domain; and
a second judgment unit operable to judge, according to the extra-domain usage rule, whether or not use of said secure device is permitted, in the case where it is judged by said first judgment unit to be outside the domain, and
said supply unit is further operable to supply the encryption key to a content use apparatus outside the domain, in the case where said judgment unit judges that the use is permitted.

24. A method for using a secure device in a secure system including the secure device which holds confidential data, and a terminal apparatus to which the secure device is connected, said method comprising:
a step of reading-out, from a memory, domain information defining a domain of a secure device and a terminal apparatus, the memory being included in one of the secure device and the terminal apparatus;
a step of judging, according to the read-out domain information, whether one of the secure device and the terminal apparatus is currently inside the domain or outside the domain;
a step of reading out, from a memory, an extra-domain usage rule which is a rule for use of the secure device outside the domain, the memory being included in one of the secure device and the terminal apparatus;
a step of judging, according to the read-out extra-domain usage rule, whether or not use of the secure device is permitted, in the case where it is judged by said first judgment unit to be outside the domain; and
a control step of enabling use of the secure device in the terminal apparatus in any of: the case where it is judged to be inside the domain; and the case where it is judged that use is permitted.

25. The secure device use method according to Claim 24,
wherein the terminal apparatus is a content use apparatus reproducing an encrypted content,
the confidential data is an encryption key for decrypting the content, and
in said control step, the confidential data, within the secure device, is supplied from the secure device to the terminal apparatus in any of: the case where it is judged by the first judgment unit to be inside the domain; and the case where it is judged by the second judgment unit that use is permitted.

26. A computer executable program for use in a secure system including a secure device which holds confidential data, and a terminal apparatus to which the secure device is connected, said program causing a computer to execute:
a step of reading-out, a memory, domain information defining a domain of a secure device and a terminal apparatus, the memory being included in one of the secure device and the terminal apparatus;
a step of judging, according to the read-out domain information, whether one of the secure device and the terminal apparatus is currently inside the domain or outside the domain;
a step of reading out, a memory, an extra-domain usage rule which is a rule for use of the secure device outside the domain, the memory being included in one of the secure device and the terminal apparatus;
a step of judging, according to the read-out extra-domain usage rule, whether or not use of the secure device is permitted, in the case where it is judged by the first judgment unit to be outside the domain; and
a control step of enabling use of the secure device in the terminal apparatus in any of: the case where it is judged to be inside the domain; and the case where it is judged that use is permitted.

27. A content distribution apparatus in a content use system including said content distribution apparatus, a content use apparatus, and a secure device, said content distribution apparatus comprising
a transmission unit operable to transmit, to a content use apparatus, an extra-domain usage rule which is a usage rule for said secure device with respect to a content use apparatus outside of a domain.

28. The content distribution apparatus according to Claim 27,
wherein the extra-domain usage rule concerns at least one of the following extra-domain criteria: (a) the number of content reproductions; (b) the number of content use apparatuses; (c) the number of domains; (d) a validity period; (e) a use duration; (f) the number of terminal IDs; (g) the number of domain IDs; (h) the number of contents; and the number of licenses.
